# EUROPÄISCHE PATENTANMELDUNG

(11) **EP 0 611 894 A2**
(43) Veröffentlichungstag der Anmeldung: **24.08.1994**
(21) Anmeldenummer: 93119080.5
(22) Anmeldetag: 26.11.1993
(51) Int. Cl.: F16D 3/60

(54) **Kupplung für rotierende Wellen**

(30) Priorität: 19.01.1993 DE 4301198
(71) Anmelder: KÜSEL ANTRIEBE GmbH, D-45307 Essen (DE)
(72) Erfinder: Ruiz, José, D-42699 Solingen (DE); Rohde, Manfred, Dipl.-Ing., D-45289 Essen (DE); Müller, Peter, D-45139 Essen (DE)
(74) Vertreter: Albrecht, Rainer Harald, Dr.-Ing.

(57) **Zusammenfassung**

Kupplung für rotierende Wellen mit einer Kupplungsringanordnung aus drei konzentrischen Kupplungsringen (3,4,5), die untereinander auf geschmierten Zylinderrollen (6) drehbar gelagert sind und jeweils über Lenker mit einer antriebsseitigen sowie einer abtriebsseitigen Kupplungshälfte verbunden sind. Die Zylinderrollen (6) sind in Ringnuten (12) angeordnet und rollen auf verschleißfesten Laufbuchsen (13,14,15) ab, die paarweise in benachbarten Kupplungsringen eingesetzt sind. Beidseits der Ringnuten (12) in randnahen Bereichen der Kupplungsringe sind Berührungsdichtungen (16) für die Wälzlagerabdichtung angeordnet. Erfindungsgemäß ist der äußere Kupplungsring (5) einteilig ausgebildet. Die darin eingepaßte äußere Laufbuchse (13) erstreckt sich nahezu über die gesamte Breite des äußeren Kupplungsringes (5). In die äußere Laufbuchse (13) ist mindestens eine Ringnut (12) für die zwischen dem mittleren (4) und äußeren Kupplungsring (5) angeordneten Zylinderrollen (6) eingearbeitet. Außerdem weist die äußere Laufbuchse (13) endseitige Bundflächen (18) auf, an denen die Berührungsdichtungen (16) zwischen dem mittleren (4) und äußeren Kupplungsring (5) gleitend anliegen.

## Beschreibung

Die Erfindung betrifft eine Kupplung für rotierende Wellen, die einen Achsversatz zwischen den Wellenachsen ausgleicht, mit einer antriebsseitigen sowie einer abtriebsseitigen Kupplungshälfte und mit einer Kupplungsringanordnung aus drei konzentrischen Kupplungsringen, die untereinander auf geschmierten Zylinderrollen drehbar gelagert sind und jeweils über einen ersten Lenker mit der antriebsseitigen Kupplungshälfte sowie über einen zweiten, um 180° winkelversetzten Lenker mit der abtriebsseitigen Kupplungshälfte verbunden sind, wobei die Kupplungsringe radial erstreckende Arme aufweisen, die paarweise an der antriebsseitigen und abtriebsseitigen Stirnseite einstückig angeformt sind und einen die Kupplungsringanordnung überbrückenden Kupplungsbolzen mit angeschlossenem Lenker halten, wobei der innere und der mittlere Kupplungsring der Kupplungsringanordnung mit radial verlaufender Trennfuge geteilt sind, wobei die Zylinderrollen in Ringnuten angeordnet sind und auf verschleißfesten Laufbuchsen abrollen, die paarweise in benachbarten Kupplungsringen eingesetzt sind, und wobei beidseits der Ringnuten in randnahen Bereichen der Kupplungsringe Berührungsdichtungen für die Wälzlagerabdichtung angeordnet sind.

Bei radial versetzt umlaufenden Wellen führt die beschriebene Kupplung Ausgleichsbewegungen in radialer Richtung aus. Ein ausreichend großer Abstand zwischen den antriebsseitigen und abtriebsseitigen Gelenkaugen der Lenker einerseits und dem Außenmantel des äußeren Kupplungsringes andererseits ist erforderlich.

Der Teilkreis für den Anschluß der Lenker ist in der Praxis häufig vorgegeben. Folglich gehen die Bemühungen dahin, die Kupplungsringanordnung mit möglichst kleinem Außendurchmesser auszubilden. Zwänge ergeben sich dadurch, daß Durchmesser und Wälzkreis der Zylinderrollen durch die Lastaufnahme der Kupplung weitestgehend festliegen. Der Konstrukteur steht folglich vor der Aufgabe, die Kupplungsringe, insbesondere den äußeren Kupplungsring, mit möglichst kleiner Ringdicke auszubilden.

Bei der aus EP 0 513 629 A1 bekannten Kupplung, von der die Erfindung ausgeht, besteht die Kupplungsringanordnung aus symmetrisch geteilten Kupplungsringen. Der äußere Kupplungsring ist ebenso wie der mittlere und innere Kupplungsring entlang seiner radialen Symmetrieebene hälftig geteilt. Die Ringnuten für die Zylinderrollen sind in die Kupplungsringe eingearbeitet und werden jeweils von der radial verlaufenden Trennfuge geschnitten. Dünnwandige Laufbuchsen, vorzugsweise aus Federstahl, sind in die Ringnuten eingelegt. Der äußere Kupplungsring ist ebenso wie der innere und mittlere Kupplungsring dickwandig ausgebildet. Einer Reduzierung seiner Dicke sind Grenzen gesetzt, da er ebenso wie der mittlere und innere Ring von Schraubenbolzen durchfaßt ist und da außerdem die Ringnuten für die Zylinderrollen eine beachtliche Schwächung darstellen. Bei einer anderen, ebenfalls in EP 0 513 629 A1 beschriebenen Ausführung der Kupplung sind die Zylinderrollen ohne Zwischenschaltung von Laufbuchsen in die Ringnuten der Kupplungsringe eingelegt. Zur Vermeidung eines in der Praxis nicht akzeptablen Verschleißes muß die Lauffläche für die Zylinderrollen gehärtet sein. Aufgrund der ungleichmäßigen Wärmeableitung im Bereich der angeformten radialen Arme einerseits und der Ringabschnitte zwischen benachbarten Radialarmen andererseits ist eine gleichmäßige Härtung über den Umfang der Laufflächen problematisch. Außerdem tritt bei der Oberflächenhärtung der Kupplungsringe ein beachtlicher Verzug der Kupplungsringe auf, so daß die Kupplungsringe unbrauchbar sind oder zumindest einer erheblichen und aufwendigen Nachbearbeitung bedürfen. Zur Vermeidung eines störenden Verzuges können Verschleißschutzschichten durch Plasmaspritz-Verfahren oder ähnliche, ohne Erwärmung der Kupplungsringe arbeitende Auftragsverfahren aufgebracht werden. Diese Verfahren sind jedoch aufwendig. Die Haftung der nachträglich aufgebrachten Verschleißschutzschichten insbesondere in den Eckenbereichen der Ringnuten ist im übrigen verbesserungsbedürftig.

Eine Kupplungsringanordnung mit gleitgelagerten Kupplungsringen ist für die eingangs beschriebene Kupplung ebenfalls vorgeschlagen worden (DE 24 31 383 C2). Für Wellenkupplungen, die große Kräfte aufnehmen müssen und für schnellaufende Wellen bestimmt sind, hat sich die Gleitlagerung nicht bewährt.

Der Erfindung liegt die Aufgabe zugrunde, eine Kupplung mit einer wälzgelagerten Kupplungsringanordnung der eingangs beschriebenen Art anzugeben, die bei vorgegebenem Teilkreis für den Anschluß der Lenker eine möglichst große Ausgleichsbewegung der Kupplungsringanordnung in radialer Richtung zuläßt.

Zur Lösung dieser Aufgabe lehrt die Erfindung, daß die Trennfuge der geteilten Kupplungsringe außerhalb von den Laufbuchsen angeordnet ist, daß der äußere Kupplungsring einteilig ausgebildet ist und daß die darin eingepaßte äußere Laufbuchse sich nahezu über die gesamte Breite des äußeren Kupplungsringes erstreckt, wobei in die äußere Laufbuchse mindestens eine Ringnut für die zwischen dem mittleren und äußeren Kupplungsring angeordneten Zylinderrollen eingearbeitet ist und wobei die äußere Laufbuchse endseitige Bundflächen aufweist, an denen die Berührungsdichtungen zwischen dem mittleren und äußeren Kupplungsring gleitend anliegen. Die Laufbuchsen sind mit einem leichten Preßsitz in die Kupplungsringe eingepaßt. Sie können auch eingeklebt werden. Erfindungsgemäß erstreckt sich die in den äußeren Kupplungsring eingepreßte Laufbuchse mindestens bis unter die randseitigen Berührungsdichtungen, die zur Wälzlageabdichtung erforderlich sind. Sie ist folglich wesentlich breiter als die eigentliche Lauffläche für die Zylinderrollen. Die Erfindung beruht auf der Erkenntnis, daß breite, in die Kupplungsringe eingepreßte Laufbuchsen eine Armierung bewirken und die Biegesteifigkeit des betreffenden Kupplungsrings beachtlich fördern. Hinzu kommt, daß die von den Zylinderrollen übertragenen Kräfte über die Laufbuchse, die sich nahezu über die gesamte Breite des äußeren Kupplungsrings erstreckt, gleichmäßig in den Kupplungsring eingeleitet werden. Im Ergebnis kann der äußere Kupplungsring mit sehr kleiner Wandstärke ausgebildet werden. In weiterer Ausgestaltung lehrt die Erfindung zur Verbesserung der Stabilität des äußeren Kupplungsrings bei sehr kleiner Wandstärke, daß der äußere Kupplungsring im Querschnitt ein nach außen offenes U-Profil aufweist, wobei der Raum zwischen den radial nach außen gerichteten U-Schenkeln antriebsseitige und abtriebsseitige Gelenkaugen der Lenker aufnimmt, wenn die Kupplung bei versetzt umlaufenden Wellen Ausgleichsbewegungen in radialer Richtung ausführt. Der Abstand der U-Schenkel ist so eingerichtet, daß eine Ausgleichsbewegung der Kupplungsringanordnung nicht behindert wird.

Vorzugsweise rollen die den äußeren Kupplungsring stützenden Zylinderrollen innenseitig auf einer glattzylindrischen Laufbuchse ab, die in den mittleren Kupplungsring eingepaßt ist und einen Anschlagbund aufweist. Dabei weist der mittlere, geteilt ausgebildete Kupplungsring ein Kupplungsringgegenstück auf und ist mit einer verschleißfesten Radialscheibe ausgerüstet. Zweckmäßigerweise wird auch die Wälzlagerung zwischen dem mittleren Kupplungsring und dem inneren Kupplungsring in entsprechender Weise eingerichtet. Dazu lehrt die Erfindung, daß das den Zylinderrollen zwischen dem inneren und dem mittleren Kupplungsring zugeordnete weitere Paar von Laufbuchsen aus einer ersten Laufbuchse mit mindestens einer eingearbeiteten Ringnut zur Aufnahme der Zylinderrollen und aus einer zweiten glattzylindrischen Laufbuchse mit einem endseitigen Anschlagbund besteht und daß an den Kupplungsring, der die glattzylindrische Laufbuchse enthält, ein Kupplungsringgegenstück mit einer verschleißfesten Radialscheibe angeflanscht ist.

Im Rahmen der Erfindung liegt es, den mittleren und/oder äußeren Kupplungsring an jeweils zwei oder mehr nebeneinander angeordneten Kränzen aus Zylinderrollen abzustützen. Dies wird erfindungsgemäß dadurch verwirklicht, daß die in den äußeren Kupplungsring eingepaßte Laufbuchse und/oder eine Laufbuchse des weiteren Laufbuchsenpaares mehrere durch jeweils einen Ringsteg beabstandete Ringnuten enthält, in denen jeweils ein Kranz aus Zylinderrollen angeordnet ist. Bei dieser Ausführungsform sind die Kupplungsringe breitflächig an Zylinderrollen abgestützt, so daß ein Verkanten der Kupplungsringe gegeneinander ausgeschlossen ist.

Die Kupplungsringe der erfindungsgemäßen Kupplungsringanordnung sind vorzugsweise als Gußteile ausgeführt. Sämtliche Laufbuchsen sowie verschleißfeste Radialscheiben bestehen zweckmäßigerweise aus durchgehärtetem Stahl.

Die Kupplungsringanordnung der erfindungsgemäßen Kupplung kann aus Kupplungsringen mit kleiner Wandstärke aufgebaut werden. Im Ergebnis ist die Herstellung einer Kupplungsringanordnung mit kleinem Außendurchmesser möglich, die bei vorgegebenem Teilkreis für den Lenkeranschluß eine große Radialbeweglichkeit der Kupplungsringanordnung ermöglicht. Ein großer Radialversatz der durch die Kupplung verbundenen Wellen ist ausgleichbar. Die Kupplungsringanordnung ist einfach aufgebaut. Die dünnwandigen Laufbuchsen können ohne Gefahr eines thermischen Verzuges durchgehärtet werden und sind im allgemeinen ohne vorherige Nachbearbeitung mit Preßsitz in die Kupplungsringe einpaßbar. Die Fertigung und Montage der Kupplungsringanordnung ist auf einfache Weise möglich. Bei einem Lagerverschleiß können die Laufbuchsen ferner ausgewechselt und die Kupplungsringe erneut verwendet werden.

Im folgenden wird die Erfindung anhand einer lediglich ein Ausführungsbeispiel darstellenden Zeichnung ausführlicher erläutert.

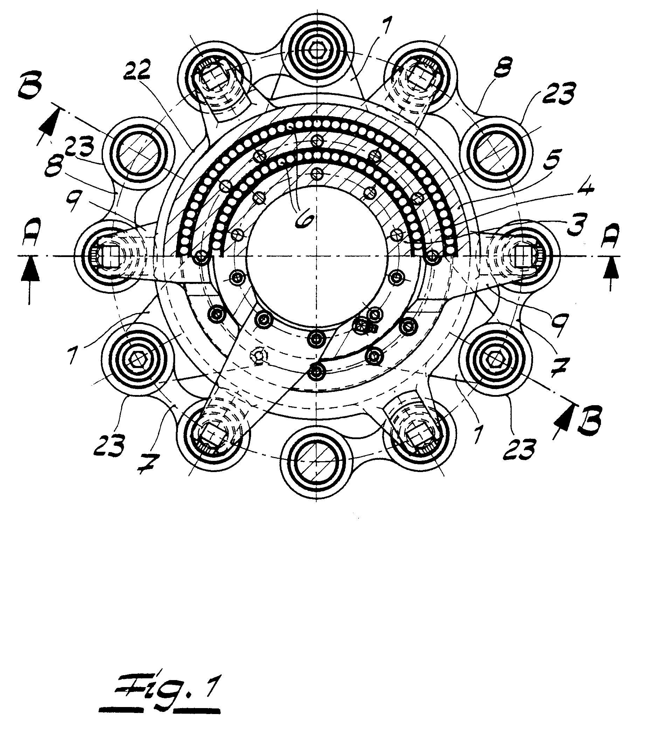

Es zeigen in schematischer Darstellung
- Fig. 1: einen Radialschnitt durch eine Kupplung für rotierende Wellen in der radialen Symmetrieebene,
- Fig. 2: einen Längsschnitt A-A durch den Gegenstand gemäß Fig. 1,
- Fig. 3: einen Längsschnitt B-B durch den Gegenstand gemäß Fig. 1.

Die in den Figuren dargestellte Wellenkupplung ist insbesondere für Schienenfahrzeuge bestimmt und gleicht einen Achsversatz zwischen den Wellenachsen rotierender Wellen aus. Zum grundsätzlichen Aufbau der Kupplung gehören eine antriebsseitige Kupplungshälfte 1, eine abtriebsseitige Kupplungshälfte 1'und eine Kupplungsringanordnung 2 aus drei konzentrischen Kupplungsringen 3, 4, 5 die untereinander auf fettgeschmierten Zylinderrollen 6 drehbar gelagert sind und jeweils über einen ersten Lenker 7 mit der antriebsseitigen Kupplungshälfte 1 sowie über einen zweiten, um 180° winkelversetzten Lenker 8 mit der abtriebsseitigen Kupplungshälfte verbunden sind. Der grundsätzliche Aufbau der Kupplung und ihre Kinematik ist aus DE 24 31 383 C2 bekannt.

Die Kupplungsringe 3, 4, 5 weisen radial erstreckende Arme 9 auf, die paarweise an der antriebs- und abtriebsseitigen Stirnseite einstückig angeformt sind und einen die Kupplungsringanordnung 2 überbrückenden Kupplungsbolzen 10 mit angeschlossenem Lenker 7 bzw. 8 halten. Der innere und der mittlere Kupplungsring 3, 4 der Kupplungsringanordnung 2 sind mit radial verlaufender Trennfuge 11 geteilt. Die Zylinderrollen 6 sind in Ringnuten 12 angeordnet und laufen auf verschleißfesten Laufbuchsen 13, 14, 15 die paarweise in benachbarten Kupplungsringen eingesetzt sind. Zum Zwecke der Wälzlagerabdichtung sind beidseits der Ringnuten 12 in randnahen Bereichen der Kupplungsringe Berührungsdichtungen 16 angeordnet.

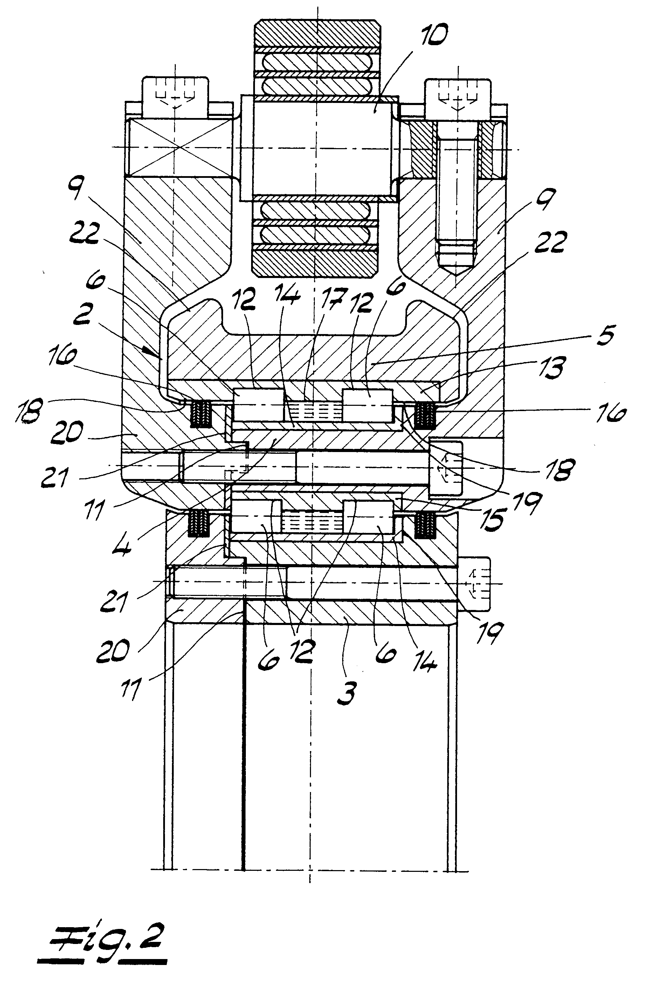

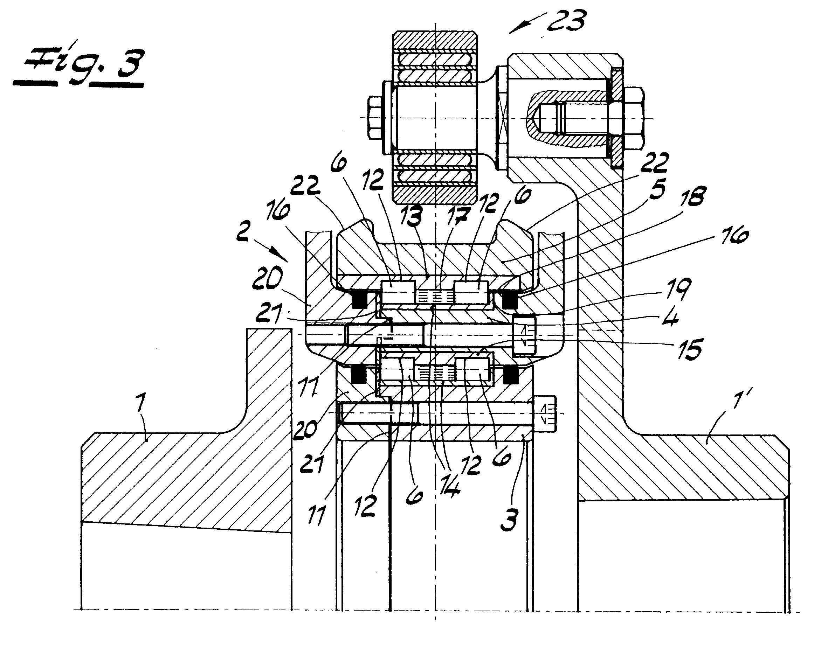

Die Laufbuchsen 13, 14, 15 sind mit einem Preßsitz in die Kupplungsringe 3, 4, 5 eingepaßt, wobei die Trennfuge 11 der geteilten Kupplungsringe 3, 4 außerhalb von den Laufbuchsen 14, 15 angeordnet ist. Die Fig. 2 und 3 lassen erkennen, daß der äußere Kupplungsring 5 einteilig ausgebildet ist und daß die darin eingepaßte äußere Laufbuchse 13 sich nahezu über die gesamte Breite des äußeren Kupplungsrings 5 erstreckt. In die äußere Laufbuchse 13 sind Ringnuten 12 eingearbeitet, in denen jeweils ein Kranz aus Zylinderrollen 6 angeordnet ist. Die Ringnuten 12 sind durch einen Ringsteg 17 voneinander beabstandet. Die äußere Laufbuchse 13 erstreckt sich über die Lauffläche der Zylinderrollen 6 hinaus und weist endseitige Bundflächen 18 auf, an denen die Berührungsdichtungen 16 zwischen dem mittleren und äußeren Kupplungsring 4, 5 gleitend anliegen.

Die den äußeren Kupplungsring 5 stützenden Zylinderrollen 6 laufen innenseitig auf einer glattzylindrischen Laufbuchse 14 die mit einem Preßsitz in den mittleren Kupplungsring 4 eingepaßt ist und einen Anschlagbund 19 aufweist. Der mittlere Kupplungsring 4 ist geteilt ausgebildet. Er weist ein Kupplungsringgegenstück 20 auf, das mit einer verschleißfesten Radialscheibe 21 ausgerüstet ist.

Zwischen dem mittleren Kupplungsring 4 und dem inneren Kupplungring 3 ist ebenfalls eine Wälzlagerung auf fettgeschmierten Zylinderrollen 6 vorgesehen. Die Wälzlagerung umfaßt ein weiteres Paar von Laufbuchsen bestehend aus einer ersten Laufbuchse 15 mit eingearbeiteten Ringnuten 12 zur Aufnahme der Zylinderrollen 6 und einer zweiten glattzylindrischen Laufbuchse 14, die einen endseitigen Anschlagbund 19 aufweist. An den Kupplungsring 3, der die glattzylindrische Laufbuchse 14 enthält, ist ein Kupplungsringgegenstück 20 angeflanscht, an dem eine verschleißfeste Radialscheibe 21 angeordnet ist.

Den Fig. 2 und 3 entnimmt man auch, daß der äußere Kupplungsring 5 im Querschnitt ein nach außen offenes U-Profil aufweist. Der Abstand zwischen den radial nach außen gerichteten Schenkeln 22 des U-Profils ist so eingerichtet, daß der zwischen den U-Schenkeln 22 gebildete Raum antriebsseitige und abtriebsseitige Gelenkaugen 23 der Lenker 7, 8 aufnimmt, wenn die Kupplung bei versetzt umlaufenden Wellen Ausgleichsbewegungen in radialer Richtung ausführt (Fig. 3). Die angeformten U-Schenkel 22 geben dem äußeren Kupplungsring 5 erhöhte Biegesteifigkeit. Aufgrund des formbedingten höheren Widerstandsmomentes kann der äußere Kupplungsring 5 mit kleiner Wandstärke gefertigt werden.

Im Ausführungsbeispiel und nach bevorzugter Ausführungsform der Erfindung sind die Kupplungsringe 3, 4, 5 als Gußteile ausgebildet und bestehen sämtliche Laufbuchsen 13, 14, 15 sowie verschleißfeste Radialscheiben 21 aus durchgehärtetem Stahl.

## Patentansprüche

1. Kupplung für rotierende Wellen, die einen Achsversatz zwischen den Wellenachsen ausgleicht, mit
einer antriebsseitigen Kupplungshälfte,
einer abtriebsseitigen Kupplungshälfte und
einer Kupplungsringanordnung aus drei konzentrischen Kupplungsringen, die untereinander auf geschmierten Zylinderrollen drehbar gelagert sind und jeweils über einen ersten Lenker mit der antriebsseitigen Kupplungshälfte sowie über einen zweiten, um 180° winkelversetzten Lenker mit der abtriebsseitigen Kupplungshälfte verbunden sind,
wobei die Kupplungsringe radial erstreckende Arme aufweisen, die paarweise an der antriebsseitigen und abtriebsseitigen Stirnseite einstückig angeformt sind und einen die Kupplungsringanordnung überbrückenden Kupplungsbolzen mit angeschlossenem Lenker halten, wobei der innere und der mittlere Kupplungsring der Kupplungsringanordnung mit radial verlaufender Trennfuge geteilt sind, wobei die Zylinderrollen in Ringnuten angeordnet sind und auf verschleißfesten Laufbuchsen abrollen, die paarweise in benachbarten Kupplungsringen eingesetzt sind, und wobei beidseits der Ringnuten in randnahen Bereichen der Kupplungsringe Berührungsdichtungen für die Wälzlagerabdichtung angeordnet sind, **dadurch gekennzeichnet,** daß die Trennfuge (11) der geteilten Kupplungsringe (3, 4) außerhalb von den Laufbuchsen (14, 15) angeordnet ist, daß der äußere Kupplungsring (5) einteilig ausgebildet ist und daß die darin eingepaßte äußere Laufbuchse (13) sich nahezu über die gesamte Breite des äußeren Kupplungsrings (5) erstreckt, wobei in die äußere Laufbuchse (13) mindestens eine Ringnut (12) für die zwischen dem mittleren und äußeren Kupplungsring (4, 5) angeordneten Zylinderrollen (6) eingearbeitet ist und wobei die äußere Laufbuchse (13) endseitige Bundflächen (18) aufweist, an denen die Berührungsdichtungen (16) zwischen dem mittleren und äußeren Kupplungsring (4, 5) gleitend anliegen.

2. Kupplung nach Anspruch 1, dadurch gekennzeichnet, daß der äußere Kupplungsring (5) im Querschnitt ein nach außen offenes U-Profil aufweist, wobei der Raum zwischen den radial nach außen gerichteten U-Schenkeln (22) antriebsseitige und abtriebsseitige Gelenkaugen (23) der Lenker (7, 8) aufnimmt, wenn die Kupplung bei versetzt umlaufenden Wellen Ausgleichsbewegungen in radialer Richtung ausführt.

3. Kupplung nach Anspruch 1 oder 2, dadurch gekennzeichnet, daß die den äußeren Kupplungsring (5) stützenden Zylinderrollen (6) innenseitig auf einer glattzylindrischen Laufbuchse (14) abrollen, die in den mittleren Kupplungsring (4) eingepaßt ist und einen Anschlagbund (19) aufweist, und daß der mittlere, geteilt ausgebildete Kupplungsring (4) ein Kupplungsringgegenstück (20) mit einer verschleißfesten Radialscheibe (21) aufweist.

4. Kupplung nach einem der Ansprüche 1 bis 3, dadurch gekennzeichnet, daß das den Zylinderrollen (6) zwischen dem inneren und dem äußeren Kupplungsring (3, 4) zugeordnete weitere Paar von Laufbuchsen aus einer ersten Laufbuchse (15) mit mindestens einer eingearbeiteten Ringnut (12) zur Aufnahme der Zylinderrollen (6) und einer zweiten glattzylindrischen Laufbuchse (14) mit einem endseitigen Anschlagbund (19) besteht und daß an den Kupplungsring (3), der die glattzylindrische Laufbuchse (14) enthält, ein Kupplungsringgegenstück (20) mit einer verschleißfesten Radialscheibe (21) angeflanscht ist.

5. Kupplung nach einem der Ansprüche 1 bis 4, dadurch gekennzeichnet, daß die in den äußeren Kupplungsring (5) eingepaßte Laufbuchse (13) und/oder eine Laufbuchse (14, 15) des weiteren Laufbuchsenpaares mehrere durch jeweils einen Ringsteg (17) beabstandete Ringnuten (12) enthält, in denen jeweils ein Kranz aus Zylinderrollen (6) angeordnet ist.

6. Kupplung nach einem der Ansprüche 1 bis 5, dadurch gekennzeichnet, daß die Kupplungsringe (3, 4, 5) als Gußteile ausgeführt sind und daß sämtliche Laufbuchsen (13, 14, 15) sowie verschleißfeste Radialscheiben (21) aus durchgehärtetem Stahl bestehen.
